# EUROPEAN PATENT APPLICATION

(11) **EP 1 445 953 A1**
(43) Date of publication of application: **11.08.2004**
(21) Application number: 02719615.3
(22) Date of filing: 27.03.2002
(51) Int. Cl.: H04N 7/173, H04N 7/087

(54) **INTERACTIVE VIDEO APPARATUS AND METHOD OF OVERLAYING THE CAPTION ON THE IMAGE USED BY THE SAID APPARATUS**

(30) Priority: 15.10.2001 CN 01136295
(71) Applicant: Huawei Technologies Co., Ltd., Guangdong, Shenzhen 518057 (CN)
(72) Inventor: WANG, Hongyuan, Huawei Service Centre Building, Gungdong, Shenzhen 518057 (CN); LONG, Yanbo, Huawei Service Centre Building, Guangdong, Shenzhen 518057 (CN); WANG, Jing, Huawei Service Centre Building, Guangdong, Shenzhen 518057 (CN)
(74) Representative: Mounteney, Simon James
(86) International application number: PCT/CN2002/000205
(87) International publication number: WO 2003/034734

(57) **Abstract**

Interactive video apparatus and method of overlaying the caption on the image used by the said apparatus, can be used on a videoconference system for caption generating and overlaying. There is a software caption module for generating needed caption image and overlaying the caption image on a service image. The software caption module pre-generates a caption dot-matrix image according to the caption content, font and color information selected by a control layer, and selectively overlays the caption image on the image signal at a local side or at a remote side. The invention reduces a hardware device and a system cost, at the same time performs the caption overlaying more flexible and convenient, so that the caption can be transmitted to the remote side.

## Description

### Field of the Technology

The invention generally relates to a caption overlaying method for an interactive video equipment, more specifically to an interactive video equipment and a software caption overlaying method used in the interactive video equipment. With this method, captions in a videoconference system can be simply generated, and the caption signals can be mingled with an image signal for transmission.

### Background of the Invention

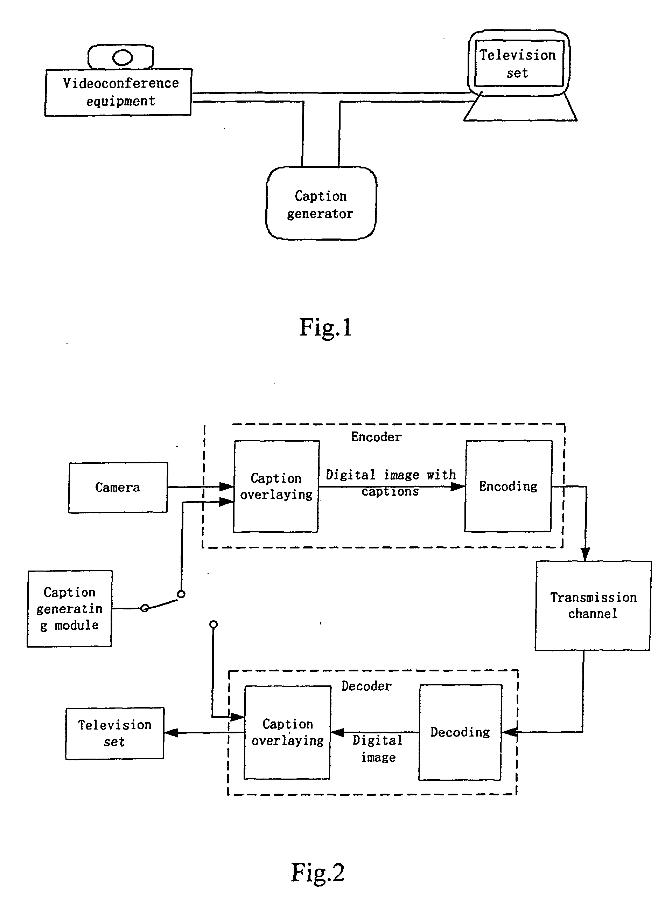

In a videoconference system, usually it is necessary to have some characters overlaid on an image; the characters such as a name of a meeting place and like are called captions. Conventionally, a hardware circuit, like a caption generator, is used as shown in Fig.1. The caption overlaying device serially connects between the videoconference equipment and the television set, and generates the needed captions and overlays them to signals of the images to display in the television set.

Disadvantages of this method are as follow. It is necessary to add extra caption overlaying hardware device, which increases the system complexity and cost; overlaid captions can only display on the local television set and cannot be transmitted to other remote television sets in the videoconference system to display. Therefore it is discommodious.

### Summary of the Invention

Objective of the invention is to provide a method for captions generating and overlaying in an interactive video system. The method reduces hardware device and costs of system, and at the same time makes captions generating and overlaying more simple; the captions can be mingled with a service image for remote transmission.

The basic thinking of the invention is as follow. A caption overlaying software receives information of a caption to be generated from a control layer; with the caption information the caption overlaying software generates a caption image with a transparent background, and then overlays the caption image on the service image to obtain an image with the captions for display or transmission.

The invention provides a caption overlaying method used on an interactive video equipment, in which information of a caption to be generated set by a user is received by a control layer, comprising:
A. providing a caption generating module, receiving the information of the caption to be generated from the control layer, and generating a caption image with a transparent background according to the said received information;
B. providing a caption overlaying module, overlaying the said caption image on a digital service image, and obtaining an image with the caption to display at a local side or transmit to a remote side.

It is better that the information of the caption to be generated that the control layer transmits to the caption generating module comprises regional codes of all characters of the said caption, a position information of the said caption, a size information of the said caption and a color information of the said caption.

It is better that the information of the caption to be generated that the control layer transmits to the caption generating module comprises regional codes of all characters of the said caption to be generated, and the regional code is generated with the steps of using a software for generating a character database; selecting a vector font; according to a required character size, displaying a character one by one on a PC screen with a software, and then recording the display result as a dot-matrix image, and storing the dot-matrix image in a specific format as a character database file.

It is better that the information of the caption to be generated that the control layer transmits to the caption generating module comprises color information of the said caption;
the caption generating module performs setting or changing the color of the characters according to the color information of the said caption and keeping the background of the caption image transparent.

It is better that step A comprises, after the caption generating module has received the said caption information from the control layer, reading dot-matrix images of all the characters, and combining the dot-matrix images with the transparent background according to a display position and content of the caption selected at the control layer.

It is better that the control layer may select to overlay the caption image at the local side or at the remote side. When selecting at local side, the caption image is overlaid on the locally received service image after decoding and then outputting to the local side for display. When selecting at remote side, the caption image is overlaid on the locally service image to be transmitted before encoding, and then encoded and transmitted to the remote side after encoding.

The invention also provides interactive video equipments that have a control layer to receive information of a caption to be generated set by a user. The interactive video equipment includes a caption generating module and a caption overlaying module. The caption generating module receives the information of the caption to be generated from the control layer, and generates a caption image with a transparent background according to the said received information;
the caption overlaying module overlays the said caption image on a digital service image, and obtains an image with the caption to display at a local side or transmit to a remote side.

It is better that the caption generating module reads dot-matrix images of all the characters, and combines the dot-matrix images with the transparent background according to a display position and content of the caption selected at the control layer after having received the said caption information from the control layer.

It is better that the caption overlaying module is in a CODEC (coder-decoder) unit and in front of an image CODEC module; the caption generating module is in the CODEC unit and connects with the caption overlaying module.

It is better that the caption overlaying module comprises a first caption overlaying module and a second caption overlaying module, and the caption generating module comprises a first caption generating module and a second caption generating module; wherein
the said first caption overlaying module is in an encoder, and locates along a service channel which is in front of an image-encoding module;
the said first caption generating module is in the encoder and connects with the said first caption overlaying module;
the said second caption overlaying module is in a decoder, and locates along a service channel which is behind an image-decoding module;
the said second caption generating module is in the decoder and connects with the said second caption overlaying module. Second caption-generating module is set in the decoder and connected with second caption-adding module.

Advantages of the invention are as follow.
1. Since the caption generator is substituted with the caption overlaying software, obviously hardware devices and costs of the system are decreased.
2. The caption image is generated only during displaying on the first frame; a simple caption overlaying procedure is only needed on all other subsequence frames with the same captions; it is unnecessary to scan each frame image, so the processing is speeded up especially on the situation of the full-screen captions.
3. With this method, since the overlaid caption and a service image are mingled to the image with the caption images to transmit, even overseas terminals can display the Chinese captions as well.
4. The caption overlaying software is set on the videoconference hardware platform, so that the caption overlaying procedure may be selected at the local side or the remote side freely. The disadvantage of which the captions cannot be transmitted to the remote side for display is solved.

### Brief Description of the Drawings

Fig. 1 shows the prior art of a caption overlaying device and the connection to a videoconference system.
Fig. 2 shows the diagram of caption overlaying principle of the invention.
Fig. 3 shows an embodiment of the invention with a single DSP platform.
Fig. 4 shows an embodiment of the invention with dual DSPs platform.

### Embodiments of the Invention

The invention will be described in more detail with reference to drawings and embodiments.

In Fig. 2, the caption images generated by the caption overlaying software module, is respectively transmitted to the caption overlaying part of the encoder or the caption overlaying part of the decoder through the switch. When the local side is selected, the switch is connected to the decoder, and the caption images are transmitted to the caption overlaying part of the decoder through the switch; after that, the caption images are overlaid on the service images that have been decoded by the decoder, and the mingled images are sent to the television set for display. When the remote side is selected, the switch is connected to the encoder, and the caption images are transmitted to the caption overlaying part of the encoder through the switch; after that, the caption images are overlaid on the images from the camera, and the overlaid images with the caption images are sent to the encoder for encoding and then sent to the transmission channel for transmitting to the remote side.

In order to have beautiful and big font for the captions, the captions are generated from a vector character database, not a usual lattice character database. According to the requirement, the character font (any kind of vector font in the Windows of the control layer can be used) and the character size are selected, and with a software the characters can be displayed one by one on screen of a PC computer, and then their display results are recorded as the dot-matrix image to form the character database with different font character and different size character.

According to selected colors at the control layer, colors of the caption images can be changed directly, but background of the caption images is kept transparent. When the colors of the captions are deployed at the control layer, the colors can be selected with a color palette, which has rich colors. Software for changing the colors of the captions is simple and flexible.

Having set the internal codes and colors information of the captions, the control layer sends the information to the caption overlaying software module. According to the number and the size of caption needed to overlay, the caption overlaying software module first generates a YUV420 format image of which size is just fit for the captions and fills it with a transparent color. Then, according to the dot-matrix images of the caption contents and the set colors, the caption overlaying software module denotes the dots to the image in ordinal to generate a color caption image based on the transparent background. The generated caption dot-matrix images are overlaid to an input or output digital image. Obviously, the caption images are needed to generate only when the first frame is displayed; for the subsequence frames, only a simple overlaying procedure is needed; it is unnecessary to scan the caption dot-matrix images for each frame. Therefore, the processing is speeded up; especially on the situation of the full-screen captions, the method is more important. In view of the overlaid caption mingling with the service images in the invention, the Chinese captions (including Chinese meeting places in Chinese) can be displayed to overseas terminals.

When the caption overlaying software module performs the overlaying procedure of the captions, the overlaying procedure can be made either at the local side or at the remote side. When the local side is selected, the caption images are sent to the decoder; the decoder overlays the caption images to the decoded images and then outputs the mingled images to the television sets for display. When the remote side is selected, the caption images are sent to the encoder; the encoder overlays the caption images to the service images, and encodes the mingled images with the caption images, and then sends to the remote side so that the captions can be displayed remotely.

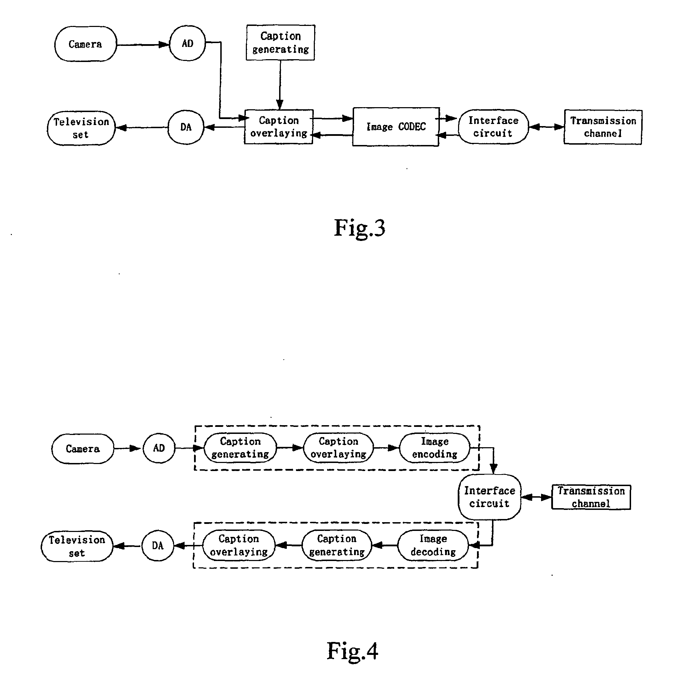

Fig. 3 is a block diagram of a videoconference terminal with a single Digital Signal Processor (DSP) platform which applies the caption overlaying software, and Fig. 4 is a block diagram of a videoconference terminal with dual DSPs platform which applies the caption overlaying software. The basic principle is identical. In Fig. 3 and Fig. 4, the audio and data processing parts are not shown, since they are not related with the invention.

In the single DSP platform case, encoding and decoding are performed by one DSP, and in the dual DSPs platform case, encoding and decoding are performed by two DSPs, respectively.

The above mention is only embodiments of the invention and does not mean to limit the invention. Any modification, replacement and improvement etc., those within the spirit and principle of the invention, are included in the scope of the accompanying Claims.

## Claims

1. A caption overlaying method used on an interactive video equipment, in which information of a caption to be generated set by a user is received by a control layer, comprising:
A. providing a caption generating module, receiving the information of the caption from the control layer, and generating a caption image with a transparent background according to the said received information;
B. providing a caption overlaying module, overlaying the said caption image on a digital service image, and obtaining an image with the caption to display at a local side or transmit to a remote side.

2. A caption overlaying method according to Claim 1, wherein the information of the caption to be generated comprises: regional codes of all characters of the said caption, a position information of the said caption, a size information of the said caption and a color information of the said caption.

3. A caption overlaying method according to Claim 1, wherein the information of the caption to be generated comprises regional codes of all characters of the said caption to be generated, and the regional code is generated with the steps of:
using a software for generating a character database; selecting a vector font; according to a required character size, displaying a character one by one on a PC screen with a software, and then recording the display result as a dot-matrix image, and storing the dot-matrix image in a specific format as a character database file.

4. A caption overlaying method according to Claim 1, wherein the information of the caption to be generated comprises color information of the said caption;
the caption generating module performs setting or changing the color of the characters according to the color information of the said caption and keeping the background of the caption image transparent.

5. A caption overlaying method according to Claim 1, in Step A comprising, after the caption generating module has received the said caption information from the control layer, reading dot-matrix images of all the characters, and combining the dot-matrix images with the transparent background according to a display position and content of the caption selected at the control layer.

6. A caption overlaying method according to Claim 1, further comprising, selecting to overlay the caption image at the local side or at the remote side by the control layer, and
for overlaying the caption image at the local side by the control layer, overlaying the said caption image on the decoded image of locally received service and then outputting to the local side for display;
for overlaying the caption image at the remote side by the control layer, overlaying the said caption image on the pre-encoded image of locally sent service and then transmitting to the remote side after encoding.

7. An interactive video equipment that has a control layer to receive information of a caption to be generated set by a user, includes a caption generating module and a caption overlaying module;
wherein the caption generating module receives the information of the caption from the control layer, and generates a caption image with a transparent background according to the said received information;
the caption overlaying module overlays the said caption image on a digital service image, and obtains an image with the caption to display at a local side or transmit to a remote side.

8. An interactive video equipment according to Claim 7, the caption generating module reads dot-matrix images of all the characters, and combines the dot-matrix images with the transparent background according to a display position and content of the caption selected at the control layer after having received the said caption information from the control layer.

9. An interactive video equipment according to Claim 7, the caption overlaying module is in a CODEC (coder-decoder) unit and in front of an image CODEC module; the caption generating module is in the CODEC unit and connects with the caption overlaying module.

10. An interactive video equipment according to Claim 7, the caption overlaying module comprises a first caption overlaying module and a second caption overlaying module, and the caption generating module comprises a first caption generating module and a second caption generating module; wherein
the said first caption overlaying module is in an encoder, and locates along a service channel which is in front of an image-encoding module;
the said first caption generating module is in the encoder and connects with the said first caption overlaying module;
the said second caption overlaying module is in a decoder, and locates along a service channel which is behind an image-decoding module;
the said second caption generating module is in the decoder and connects with the said second caption overlaying module.
